# EUROPÄISCHE PATENTSCHRIFT

(11) **EP 2 293 048 B1**
(45) Veröffentlichungstag und Bekanntmachung des Hinweises auf die Patenterteilung: **29.01.2014**
(21) Anmeldenummer: 10174577.6
(22) Anmeldetag: 31.08.2010
(51) Int. Cl.: G01N 21/90, B67C 3/00

(54) **Behältnisbehandlung mit Verschmutzungserkennung**
Container treatment with contamination detection
Traitement de récipient à l'aide d'une reconnaissance de la salissure

(30) Priorität: 02.09.2009 DE 102009039698
(43) Veröffentlichungstag der Anmeldung: 09.03.2011
(73) Patentinhaber: Krones AG, 93073 Neutraubling (DE)
(72) Erfinder: Hahn, Wolfgang, 93073 Neutraubling (DE); Pronold, Timo, 93077 Bad Abbach (DE); Böhm, Johannes, 93080 Pentling (DE)
(74) Vertreter: Bittner, Bernhard

(56) Entgegenhaltungen:
- EP-A2- 0 362 679
- WO-A1-2006/041303
- DE-A1- 4 340 668
- US-A- 5 486 693

## Beschreibung

### Beschreibung

Die vorliegende Erfindung bezieht sich auf ein Verfahren und eine Vorrichtung zum Betreiben einer Vorrichtung zum Behandeln von Behältnissen. Aus dem Stand der Technik sind die unterschiedlichsten Anlagen zum Behandeln von Behältnissen bekannt. So sind sogenannte Blasformmaschinen bekannt, welche Kunststoffvorformlinge üblicherweise durch Beaufschlagen mit Druckluft zu Kunststoffbehältnissen expandieren. Weiterhin sind auch Füllanlagen bekannt, welche die Behältnisse befüllen oder auch Etikettierstationen, welche Behältnisse mit Etiketten versehen. Derartige Anlagen erfordern dabei oft unterschiedlichste Arbeitsmedien wie beispielsweise Klebstoffe, um die Etiketten an den Behältnissen anzubringen, Kühl- oder Temperierflüssigkeiten, um Blasformen zu erwärmen oder auch Wasserstoffsuperoxydgase, um Sterilisationsprozesse durchzuführen.

Derartige Medien können dabei zu einer Verschmutzung bzw. auch Kontamination von Anlagenteilen führen. Daher sollten in regelmäßigen Abständen Reinigungen der Anlagen durchgeführt werden. In der Praxis tritt dabei auch das Problem auf, dass die Anlagen teilweise nur nachlässig gesäubert werden und es auf diese Weise auf Dauer zu im schlimmsten Falle auch das abzufüllende Getränk selbst beeinträchtigenden Verschmutzungen kommen kann.

Aus der DE 10 2006 053 673 A1 ist ein Verfahren zur Inspektion von Flaschen oder Behältern bekannt, wobei in dem jeweiligen Behälter eine vorgegebene Menge einer Inspektions- oder Kontrollflüssigkeit eingebracht wird und diese Flüssigkeit nach einer wenigstens teilweisen Entnahme aus dem Behälter auf eine evtl. Kontamination analysiert wird. Damit dient dieses Verfahren zum Untersuchen der hier abzufüllenden Behältnisse selbst.

Aus der DE 43 40 668 C2 sind ein Verfahren und eine Vorrichtung zur Messung von Kontaminationen in Mehrwegflaschen oder Behältern bekannt. Dabei werden die Behältnisse selbst beispielsweise unter Verwendung eines die Flasche durchquerenden Lichtstrahls auf Kontaminationen hin untersucht. Auch aus der DE 42 00 971 A1 sind ein Verfahren und eine Vorrichtung zur Schadstoffdetektion in Getränkeflaschen in Abfülllinien bekannt. EP-A-362 679 offenbart eine Vorrichtung zur Inspektion von Behältnissen.

Der vorliegenden Erfindung liegt die Aufgabe zugrunde, die Reinhaltung von derartigen Anlagen zum Behandeln von Behältnissen zu vereinfachen.

Dies wird erfindungsgemäß durch die Gegenstände der unabhängigen Ansprüche 1 und 8 erreicht. Vorteilhafte Ausführungsformen und Weiterbildungen sind Gegenstand der Unteransprüche.

Bei einem erfindungsgemäßen Verfahren zum Betreiben einer Vorrichtung zum Behandeln von Behältnissen werden die Behältnisse zumindest abschnittsweise durch die Vorrichtung transportiert und von der Vorrichtung in wenigstens einer vorgegebenen Weise behandelt. Dabei kommt zum Betrieb der Vorrichtung wenigstens ein fließfähiges Medium zum Einsatz.

Erfindungsgemäß werden mittels einer Strahlungseinrichtung vorgegebene Bereiche der Vorrichtung bestrahlt, um wenigstens ein Medium in einem Bereiche der Vorrichtung erkennbar zu machen, in dem das Medium funktionswidrig vorhanden ist.

Unter einer Behandlung der Behältnisse können die unterschiedlichsten Behandlungsarten verstanden werden wie beispielsweise eine Umformung von Vorformlingen zu Behältnissen, ein Abfüllen der Behältnisse, ein Etikettieren der Behältnisse, ein Sterilisieren der Behältnisse, ein Spülen der Behältnisse oder auch nur das bloße Transportieren der Behältnisse.

Bei dem fließfähigen Medium kann es sich sowohl um ein gasförmiges als auch um ein flüssiges oder auch zähfließendes Medium handeln. Unter einem Medium, welches beim Betrieb der Vorrichtung zum Einsatz kommt kann es sich einerseits um ein solches Medium handeln, welches zur Behandlung der Behältnisse verwendet wird, wie beispielsweise einen Klebstoff, um Etiketten an dem Behältnis anzubringen oder auch eine Sterilisationssubstanz um die Behältniswandung zu reinigen oder auch um beispielsweise Schmierstoffe, um Gelenkverbindungen zu schmieren oder auch um Kurvenrollen zu betreiben. Der Begriff des zum Einsatz Kommens kann sich damit sowohl auf die Behältnisse als auch auf die Vorrichtung selbst beziehen d.h. das Medium kann sowohl bei der Behandlung der Behältnisse selbst oder auch bei dem Betrieb der Vorrichtung zum Einsatz kommen.

Es wird daher erfindungsgemäß vorgeschlagen, dieses Medium in einen Bereich aufzuspüren, in dem es normalerweise nicht vorhanden ist, beispielsweise einen Leim, der durch den Maschinenbetrieb an andere Orte verschleppt wurde oder auch einen Schmierstoff, der zu Stellen gewandert ist, an denen er nicht zur ordnungsgemäßen Funktion der Vorrichtung beiträgt bzw. die Funktion der Vorrichtung oder die Vorrichtung selbst sogar stört bzw. schädigt.

Im Falle eines Gases kann es sich beispielsweise um Leckagen handeln, welche zu einem Austritt des Gases an ungewünschten Stellen führen. Die Strahlungseinrichtung beaufschlagt Bereiche der Vorrichtung oder auch des Mediums selbst mit Strahlung so dass diese hierauf reagieren. Auf diese Weise wird dem Maschinenbediener eine Reinigung der Vorrichtung erleichtert, da er relativ schnell erkennen kann, an welchen Stellen Verschmutzungen vorhanden sind. So könnten beispielsweise gezielt solche Bereiche der Vorrichtung bestrahlt werden, an denen erfahrungsgemäß Verschleppungen von Verschmutzungen auftreten können.

Weiterhin können mit dem erfindungsgemäßen Verfahren schnell Leckagen erkannt werden.

Vorteilhaft handelt es sich bei dem Medium um ein flüssiges oder zähfließendes Medium. In diesem Falle kann es sich beispielsweise bei dem Medium um ein Temperiermedium einer Blasform handeln, dem beispielsweise zur Erkennung Zusatzstoffe zugefügt werden könnten. So könnte es sich beispielsweise im Fall eines Heatsetprozesses um Öl handeln oder auch um Wasser im Falle eines Standardprozesses. Diese Flüssigkeiten können dabei sowohl durch den Boden der Blasformen als auch durch die Blasformhälfen und in einer Platte im Bereich des Flaschenhalses auftreten.

Weiterhin könnten Leckagen bei Schlauchleitungen von einem zentralen Mediumverteiler zu den Anschlüssen an der Blasstation als auch an den Schläuchen von der Blasstation zur Form auftreten. Speziell bei bewegten Schläuchen, die durch das Öffnen und Schließen der Form bewegt werden, können derartige Leckagen auftreten. Teilweise werden im Rahmen der Blasumformung auch heiße Substanzen wie beispielsweise 160 Grad heißes Öl auftreten so dass durch die vorliegende Erfindung auch Sicherheitsrisiken verringert werden können. Weiterhin werden üblicherweise zum Bewegen von Maschinenteilen sogenannte feststehende Steuerkurven verwendet wobei auch diese der Schmierung bedürfen. Derartige Schmiermedien können ebenfalls an Orte weitergetragen werden, an denen sie nicht zum ordnungsgemäßen Funktionieren der Vorrichtung beitragen.

Bei einem weiteren bevorzugten Verfahren weist das Medium wenigstens eine Substanz auf, welche auf die von der Strahlungseinrichtung abgegebene Strahlung in (optisch) wahrnehmbarer Weise reagiert. So könnte es sich bei dem Medium beispielsweise um eine Substanz wie beispielsweise einen Leim handeln, der unter UV-Licht oder IR-Licht sichtbar wird. Falls also das Licht der Strahlungseinrichtung auf einen Bereich trifft, an dem sich gelegentlich Verschmutzungen befinden können, so können diese durch eine bestimmte optische Reaktion wie beispielsweise ein Leuchten erkennbar gemacht werden und auf diese Weise einfach vom Maschinenbenutzer beseitigt werden.

Bei einem weiteren vorteilhaften Verfahren ist das Medium aus einer Gruppe von Medien ausgewählt, welche Öle, Fette, Schmierstoffe, Leime, Wasser, wässrige Lösungen, Gase beispielsweise Wassersuperoxyd, und dergleichen enthält.

Bei einem weiteren vorteilhaften Verfahren ist wenigstens eine Oberfläche wenigstens eines Vorrichtungsteils derart gestaltet, dass sie auf Bestrahlung in (optisch) wahrnehmbarer Weise reagiert. In diesem Falle kann die Oberfläche bei Bestrahlung beispielsweise fluoreszieren, falls sich jedoch auf bestimmten Bereichen Verschmutzungen finden, werden diese durch eine entsprechende abgeschwächte Reaktion der betreffenden Oberfläche ebenfalls sichtbar.

Bei einem weiteren vorteilhaften Verfahren weist wenigstens eine Oberfläche eine Beschichtung auf, welche so gestaltet ist, dass sie auf die Bestrahlung in wahrnehmbarer Weise reagiert. In diesem Falle wird die Beschichtung reagieren, wenn diese unmittelbar von der Bestrahlung getroffen wird, jedoch nicht oder weniger, falls sich Verschmutzungen auf dieser Beschichtung finden.

Bei einem weiteren vorteilhaften Verfahren enthält die Strahlung UV- (ultraviolettes) oder IR- (infrarotes) Licht. Die Strahlungseinrichtung kann dabei bestimmte Bereiche der Vorrichtung spotartig bestrahlen.

Weiterhin wäre es auch möglich, dass die Strahlungsquelle speziell in einem Reinigungs- oder Inspektionsbetrieb zuschaltbar ist. Auch wäre es möglich, dass sich die Strahlungsquelle beispielsweise bei einer Störung oder nach einer bestimmten Betriebszeit zuschaltet.

Auf diese Weise wird eine präventive Reinigung erheblich vereinfacht, da der Bediener nicht die vollständige Vorrichtung sondern tatsächlich nur diejenigen Bereiche mit tatsächlicher Leim- oder Medienverschmutzung putzen muss.

Die vorliegende Erfindung ist weiterhin auf eine Vorrichtung zum Behandeln von Behältnissen gerichtet mit wenigstens einer Behandlungseinheit um die Behältnisse in einer vorgegebenen Weise zu behandeln und wenigstens einer Transporteinrichtung um die Behältnisse wenigstens abschnittsweise durch die Vorrichtung zu transportieren, wobei wenigstens ein fließfähiges Medium bei einem Betrieb der Vorrichtung zum Einsatz kommt. Erfindungsgemäß weist die Vorrichtung eine Strahlungseinrichtung auf, welche vorgegebene Bereiche der Vorrichtung bestrahlt um das fließfähige Medium in solchen Bereichen sichtbar zu machen, in denen das fließfähige Medium funktionswidrig vorhanden ist. Vorteilhaft weist die Vorrichtung eine Zufuhreinrichtung zum Zuführen der Behältnisse und eine Abführeinheit zum Abführen der Behältnisse auf.

Auch vorrichtungsseitig wird daher vorgeschlagen, eine Bestrahlungseinrichtung vorzusehen, welche dafür ausgelegt ist, um Verschmutzungen in funktionswidrigen Bereichen der Vorrichtung zu erkennen, so dass eine Reinigung der Vorrichtung vereinfacht wird.

Bei einer weiteren vorteilhaften Ausführungsform weist die Vorrichtung eine Erfassungseinrichtung auf, welche durch die Strahlungseinrichtung aktivierte Strahlung erfasst. Falls beispielsweise Verschmutzungen fluoreszieren oder in anderer Weise auf die Strahlung reagieren so könnte eine entsprechende Erfassungseinrichtung dies erfassen und dem Benutzer ein Signal wie beispielsweise ein Alarmsignal ausgeben.

Bei einer weiteren vorteilhaften Ausführungsform bestrahlt die Strahlungseinrichtung solche Bereiche der Maschine, welche in der Transportrichtung der Behältnisse stromabwärts bezüglich solcher Bereiche liegen in denen das Medium funktionsmäßig zum Einsatz kommt.

Aus wäre es möglich dass die Strahlungseinrichtung solche Bereiche bestrahlt, welche unterhalb solcher Bereiche liegen, in denen das Medium funktionsmäßig zum Einsatz kommt. Dies ist beispielsweise dann relevant, wenn die betreffenden Medien durch ein Wirken der Schwerkraft nach unten fließen.

Bei einer weiteren vorteilhaften Ausführungsform ist die Strahlungseinrichtung aktivierbar. So kann sie aktiv durch einen Benutzer aktiviert werden oder auch nach bestimmten Zeitabläufen oder Intervallen selbsttätig aktiviert werden.

Bei einer weiteren vorteilhaften Ausführungsform weist die Vorrichtung wenigstens eine Einrichtung zum Umformen von Kunststoffvorformlingen zu Behältnissen und/oder wenigstens eine Einrichtung zum Etikettieren von Behältnissen auf. Für diese Vorrichtungsgattungen ist die vorliegende Erfindung besonders relevant, da diese Vorrichtungen gezielt bestimmte Medien zum Behandeln der Flasche einsetzen wie beispielsweise Leime oder Temperiermedien zum Temperieren der Blasform.

Weitere Vorteile und Ausführungsformen ergeben sich aus den beigefügten Zeichnungen. Dabei zeigen:

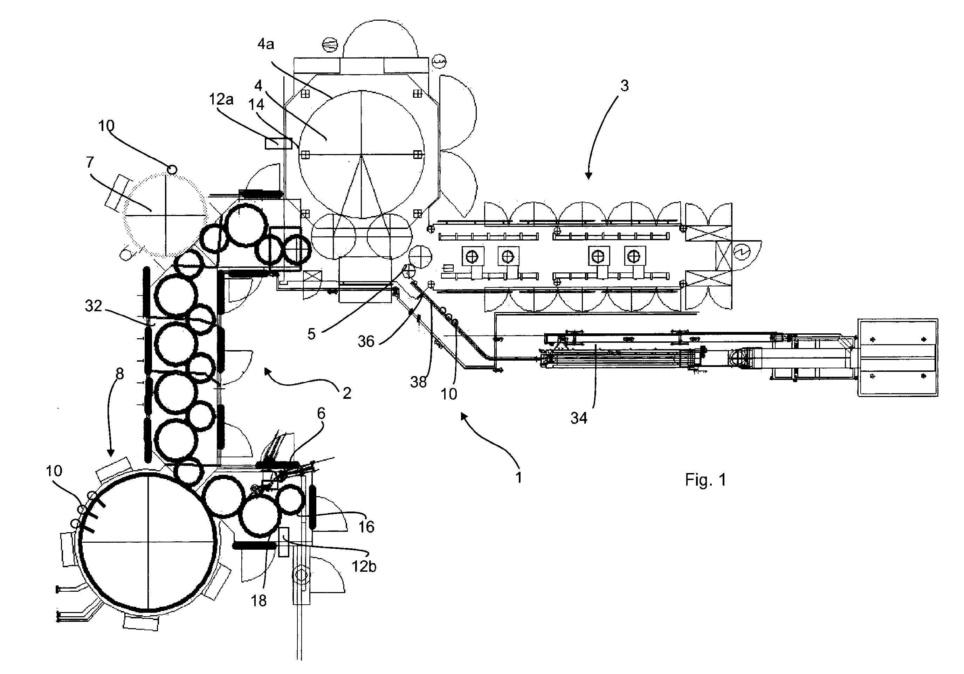

- Fig. 1: Eine schematische Darstellung einer erfindungsgemäßen Anlage.

Fig. 1 zeigt eine schematische Darstellung einer erfindungsgemäßen Vorrichtung 1. Diese Vorrichtung 1 weist eine Sortiereinrichtung 34 zum Sortieren von Vorformlingen 10 auf. Die Vorformlinge werden mit einer ersten Transporteinheit 38, welche hier als Rutsche ausgebildet ist, in Richtung eines Eintaktrades 5 gefördert. Stromaufwärts bezüglich dieses Eintaktrades sind die Vorformlinge noch nicht vereinzelt geführt. Das Bezugszeichen 36 bezieht sich auf eine Sperreinrichtung, mit der die Zuführung der Vorformlinge gesperrt werden kann.

Anschließend werden die Vorformlinge vereinzelt durch eine Heizeinrichtung 3 mit einer weiteren (nicht im Detail dargestellten) Transporteinrichtung gefördert und von da an eine Blaseinrichtung 4 übergeben. Diese Blaseinrichtung weist dabei ein Trägerrad 4a auf, an dem eine Vielzahl von (nicht gezeigten) Blasstationen angeordnet ist, um die Kunststoffvorformlinge zu Behältnissen zu expandieren.

An diese Blaseinrichtung schließt sich eine Spüleinheit 7 zum Spülen der Behältnisse an. Über weitere Transporteinheiten 32 werden die Behältnisse schließlich an eine Fülleinrichtung 8 übergeben. Diese Fülleinrichtung weist eine Vielzahl von Füllelementen auf um die Behältnisse mit einer Flüssigkeit, wie einem Getränk, zu befüllen. An diese Fülleinrichtung schließt sich eine Etikettierstation an, um die Behältnisse mit Etiketten zu versehen. Daneben können hier auch noch Vorrichtungen vorgesehen sein, welche Verschlüsse an die Behältnisse heranführen bzw. die Behältnisse mit den Verschlüssen verschließen. Die einzelnen Transporteinheiten 32, 38 bilden insgesamt eine Transporteinrichtung 2.

Die Bezugszeichen 12a und 12b beziehen sich auf Strahlungseinrichtungen, welche bestimmte Vorrichtungsteile d. h. hier Bereiche der Blaseinrichtung 4 sowie der Etikettiereinrichtung 6 mit Strahlung beispielsweise UV-Licht oder Infrarotlicht bestrahlen. Falls beispielsweise Leim oder auch Temperiermedien an Bereiche verschleppt wurden, an denen sie normalerweise nicht vorhanden sind so können diese Bereiche mittels der Bestrahlungseinrichtung 12a und 12b bestrahlt werden, um derartige Verschmutzungen sichtbar zu machen. Die Bezugszeichen 14, 16, 18 kennzeichnen grob schematisch Bereiche, welche von den Strahlungseinrichtungen bestrahlt werden. Vorteilhaft werden solche Bereiche der Vorrichtung bestrahlt, an denen Materialien zumindest für einen bestimmten Zeitraum haften bzw. verbleiben können.

Dabei ist es möglich, dass die einzelnen Bestrahlungseinrichtungen 12a und 12b jeweils stationär angeordnet sind um bestimmte Bereiche zu beleuchten. Es wäre jedoch auch möglich, dass die Bestrahlungseinrichtungen 12a und 12b beweglich beispielsweise schwenkbar oder verschiebbar angeordnet sind um bestimmte Bereiche der Vorrichtung abzuscannen.

Auch könnten die Bestrahlungseinrichtungen 12, 12b entlang des Transportpfades, auf dem auch die Behältnisse gefördert werden, mitbewegt werden um auf diese Weise größere Bereiche der Vorrichtung auszuleuchten um so Verschmutzungen leichter feststellen zu können. Auch könnte die Bestrahlungseinrichtung als tragbare Einheit - welche ggfs auch kabellos mit einer Zentralstation kommuniziert - ausgeführt sein, so dass der Benutzer diese mitführen kann, um beliebige Bereiche der Vorrichtung zu bestrahlen.

Auch wäre es möglich, dass mittels der Strahlungseinrichtung Verschmutzungen automatisiert erkannt werden, etwa, wenn eine Sensoreinrichtung vorgesehen ist, welche die von dem Medium abgegebene Strahlung bzw. Reflexionen erkennt. Auch könnte, falls Verschmutzungen an besonders kritischen Bereichen festgestellt werden, die Sperreinrichtung 36 die weitere Zufuhr von Behältnissen unterbrechen. Der Bediener der Vorrichtung könnte auch über einen Alarm über Verschmutzungen in besonders maschinenkritischen Bereichen aufmerksam gemacht werden.

### Bezugszeichenliste

- 1: Vorrichtung
- 2: Transporteinrichtung
- 3: Heizeinrichtung
- 4: Blaseinrichtung
- 4a: Trägerrad
- 5: Eintaktrad
- 6: Etikettiereinrichtung
- 7: Spüleinheit
- 8: Fülleinrichtung
- 10: Vorformling, Behältnis
- 12a, 12b: Strahlungseinrichtung
- 14, 16, 18: Bereiche der Vorrichtung
- 32, 38: Transporteinheit
- 34: Sortiereinrichtung
- 36: Sperreinrichtung
- 38: Transporteinheit

## Patentansprüche

1. Verfahren zum Betreiben einer Vorrichtung (1) zum Behandeln von Behältnissen (10), wobei die Behältnisse (10) zumindest abschnittsweise durch die Vorrichtung (1) transportiert werden und von der Vorrichtung (1) in wenigstens einer vorgegebenen Weise behandelt werden und wobei zum Betrieb der Vorrichtung (1) wenigstens ein fließfähiges Medium zum Einsatz kommt,
**dadurch gekennzeichnet, dass**
dass mittels einer Strahlungseinrichtung (12a, 12b) vorgegebene Bereiche (14, 16, 18) der Vorrichtung (1) bestrahlt werden, um wenigstens ein Medium in einem Bereich (14, 16, 18) der Vorrichtung (1) erkennbar zu machen, in dem das Medium funktionswidrig vorhanden ist, wobei die Strahlungseinrichtung (12) solche Bereiche der Vorrichtung bestrahlt, welche in der Transportrichtung der Behältnisse (10) stromabwärts bezüglich solcher Bereiche und/oder unterhalb solcher Bereiche liegen, in denen das Medium funktionsmäßig zum Einsatz kommt.

2. Verfahren nach Anspruch 1,
**dadurch gekennzeichnet, dass**
das Medium ein flüssiges oder zähfließendes Medium ist.

3. Verfahren nach wenigstens einem der vorangegangenen Ansprüche,
**dadurch gekennzeichnet, dass**
das Medium wenigstens eine Substanz aufweist, welche auf die von der Strahlungseinrichtung abgegebene Strahlung in wahrnehmbarer Weise reagiert.

4. Verfahren nach wenigstens einem der vorangegangenen Ansprüche,
**dadurch gekennzeichnet, dass**
das Medium aus einer Gruppe von Medien ausgewänlt ist, welche Öle, Fette, Schmierstoffe, Leime, Wasser, wässrige Lösungen, Wasserstoffsuperoxyd, und dergleichen enthält.

5. Verfahren nach wenigstens einem der vorangegangenen Ansprüche,
**dadurch gekennzeichnet, dass**
wenigstens eine Oberfläche wenigstens eines Vorrichtungsteils derart gestaltet ist, dass sie auf die Bestrahlung in wahrnehmbarer Weise reagiert.

6. Verfahren nach Anspruch 5,
**dadurch gekennzeichnet, dass**
wenigstens eine Oberfläche eine Beschichtung aufweist, welche derart gestaltet ist, dass sie auf die Bestrahlung in wahrnehmbarer Weise reagiert.

7. Verfahren nach wenigstens einem der vorangegangenen Ansprüche,
**dadurch gekennzeichnet, dass**
die Strahlung UV - Licht oder IR - Licht enthält.

8. Vorrichtung (1) zum Behandeln von Behältnissen mit wenigstens einer Behandlungseinheit (4, 6), um die Behältnisse (10) in einer vorgegebenen Weise zu behandeln, mit wenigstens einer Transporteinrichtung (2) um die Behältnisse wenigstens abschnittsweise durch die Vorrichtung zu transportieren wobei wenigstens ein fließfählges Medium bei dem Betrieb der Vorrichtung zum Einsatz kommt,
**dadurch gekennzeichnet, dass**
die Vorrichtung eine Strahlungseinrichtung (12) aufweist, welche vorgegebene Bereiche der Vorrichtung (1) bestrahlt, um das fließfähige Medium in solchen Bereichen (14, 16, 18) der Vorrichtung sichtbar zu machen, in denen das fließfähige Medium funktionswidrig vorhanden ist, , wobei die Strahlungseinrichtung (12) solche Bereiche der Vorrichtung bestrahlt, welche in der Transportrichtung der Behältnisse (10) stromabwärts bezüglich solcher Bereiche und/oder unterhalb solcher Bereiche liegen, in denen das Medium funktionsmäßig zum Einsatz kommt.

9. Vorrichtung (1) nach Anspruch 1,
**dadurch gekennzeichnet, dass**
die Vorrichtung eine Erfassungseinrichtung (20) aufweist, welche durch die Strahlungseinrichtung (12) aktivierte Strahlung erfasst.

10. Vorrichtung nach wenigstens einem der vorangegangenen Ansprüche,
**dadurch gekennzeichnet, dass**
die Strahlungseinrichtung (12) aktivierbar ist.

11. Vorrichtung nach wenigstens einem der vorangegangenen Ansprüche,
**dadurch gekennzeichnet, dass**
die Vorrichtung wenigstens eine Einrichtung (4) zum Umformen von Kunststoffvorformlingen zu Behältnissen und/oder wenigstens eine Einrichtung (6) zum Etikettieren von Behältnissen aufweist

## Claims

1. A method of operating a device (1) for the treatment of containers (10), wherein the containers (10) are conveyed at least locally through the device (1) and are treated by the device (1) in at least one pre-set manner and wherein use is made of at least one flowable medium in order to operate the device (1), **characterized in that** pre-set areas (14, 16, 18) of the device (1) are irradiated by means of a radiation device (12a, 12b) in order to make at least one medium detectable in an area (14, 16, 18) of the device (1) in which the medium is present in a non-functional manner, wherein the radiation device (12) irradiates those areas of the device which are situated - in the conveying direction of the containers (10) - downstream with respect to those areas and/or below in which use is made of the medium in a functional manner.

2. A method according to claim 1, **characterized in that** the medium is a liquid or a viscous medium.

3. A method according to at least one of the preceding claims, **characterized in that** the medium comprises at least one substance which reacts in a perceptible manner to the radiation emitted by the radiation device.

4. A method according to at least one of the preceding claims, **characterized in that** the medium is selected from a group of media which contains oils, fats, lubricants, glues, water, aqueous solutions, hydrogen peroxide, and the like.

5. A method according to at least one of the preceding claims, **characterized in that** at least one surface of at least one device component is formed in such a way that it reacts in a perceptible manner to the radiation.

6. A method according to claim 5, **characterized in that** at least one surface has a coating which is formed in such a way that it reacts in a perceptible manner to radiation.

7. A method according to at least one of the preceding claims, **characterized in that** the radiation contains UV light or IR light.

8. A device (1) for treating containers, with at least one treatment unit (4, 6) in order to treat the containers (10) in a pre-set manner, with at least one conveying device (2) in order to convey the containers at least locally through the device, wherein use is made of at least one flowable medium during the operation of the device, **characterized in that** the device has a radiation device (12) which irradiates pre-set areas of the device (1) in order to make the flowable medium visible in those areas (14, 16, 18) in which the flowable medium is present in a non-functional manner, wherein the radiation device (12) irradiates those areas of the device which are situated - in the conveying direction of the containers (10) - downstream with respect to those areas and/or below in which use is made of the medium in a functional manner.

9. A device (1) according to claim 1, **characterized in that** the device has a detection device (20) which detects radiation activated by the radiation device (12).

10. A device (1) according to at least one of the preceding claims, **characterized in that** the radiation device (12) is capable of being activated.

11. A device (1) according to at least one of the preceding claims, **characterized in that** the device has at least one device (4) for shaping plastics pre-forms to form containers and/or at least one device (6) for labelling containers.

## Revendications

1. Procédé de fonctionnement d'une installation (1) pour le traitement de récipients (10), lesdits récipients (10) étant convoyés au moins en partie au travers de l'installation (1) et traités par l'installation (1) d'au moins une façon définie, et au moins un fluide à écoulement libre étant utilisé pour le fonctionnement de l'installation (1),
**caractérisé en ce que**
des zones (14, 16, 18) définies de l'installation (1) sont irradiées par un dispositif de rayonnement (12a, 12b), pour rendre détectable au moins un médium dans une zone (14, 16, 18) de l'installation (1) où le médium est présent inutilement, le dispositif de rayonnement (12) irradiant les zones de l'installation qui, dans la direction de transport des récipients (10), sont situées en aval et/ou en dessous des zones où le fluide est utilisé fonctionnellement.

2. Procédé selon la revendication 1, **caractérisé en ce que**
le fluide est un fluide liquide ou visqueux.

3. Procédé selon au moins une des revendications précédentes, **caractérisé en ce que**
le fluide comporte au moins une substance qui réagit de manière perceptible au rayonnement émis par le dispositif de rayonnement.

4. Procédé selon au moins une des revendications précédentes, **caractérisé en ce que**
le médium est sélectionné dans un groupe de médiums comprenant des huiles, des graisses, des lubrifiants, des colles, de l'eau, des solutions aqueuses, du peroxyde d'hydrogène, et similaires.

5. Procédé selon au moins une des revendications précédentes, **caractérisé en ce que**
au moins une surface d'au moins une partie d'installation est prévue pour réagir de manière perceptible au rayonnement.

6. Procédé selon la revendication 5, **caractérisé en ce que**
au moins une surface présente un revêtement prévu pour réagir de manière perceptible au rayonnement.

7. Procédé selon au moins une des revendications précédentes, **caractérisé en ce**
**que** le rayonnement comprend une lumière UV ou une lumière IR.

8. Installation (1) pour le traitement de récipients avec au moins une unité de traitement (4, 6) destinée à traiter les récipients (10) d'une façon définie, avec au moins un dispositif de transport (2) destiné à convoyer les récipients au moins en partie au travers de l'installation, au moins un fluide à écoulement libre étant utilisé pour le fonctionnement de l'installation,
**caractérisée en ce que**
ladite installation comporte un dispositif de rayonnement (12) qui irradie des zones définies de l'installation (1), pour rendre visible le fluide à écoulement libre dans une zone (14, 16, 18) de l'installation où le fluide est présent inutilement, le dispositif de rayonnement (12) irradiant les zones de l'installation qui, dans la direction de transport des récipients (10), sont situées en aval et/ou en dessous des zones où le fluide est utilisé fonctionnellement.

9. Installation (1) selon la revendication 1, **caractérisée en ce que**
ladite installation comporte un dispositif de détection (20) qui détecte le rayonnement activé par le dispositif de rayonnement (12).

10. Installation selon au moins une des revendications précédentes, **caractérisée en ce que**
le dispositif de rayonnement (12) peut être activé.

11. Installation selon au moins une des revendications précédentes, **caractérisée en ce que**
ladite installation comporte au moins un dispositif (4) pour le formage de préformes en matière plastique de manière à obtenir des récipients, et/ou au moins un dispositif (6) pour l'étiquetage de récipients.
